# DEMANDE DE BREVET EUROPEEN

(11) **EP 2 481 706 A1**
(43) Date de publication de la demande: **01.08.2012**
(21) Numéro de dépôt: 12150727.1
(22) Date de dépôt: 11.01.2012
(51) Int. Cl.: C01B 21/04, B01D 53/047

(54) **Installation et procédé de production et de fourniture de gaz enrichi en azote**

(30) Priorité: 28.01.2011 FR 1150659
(71) Demandeur: L'Air Liquide Société Anonyme pour l'Etude et l'Exploitation des Procédés Georges Claude, 75007 Paris (FR); Nitrocraft, 44410 Herbignac (FR)
(72) Inventeur: Le Damany, Yoann, 56400 Surzur (FR)
(74) Mandataire: De Cuenca, Emmanuel Jaime

(57) **Abrégé**

Installation et procédé de production et de fourniture de gaz enrichi en azote, l'installation (1) comprenant au moins une colonne (3) de séparation, notamment de séparation par adsorption par variation de pression, la au moins une colonne (3) comprenant une entrée (4) de gaz destinée à être reliée à une conduite de fourniture d'air sous pression et une sortie (6) de gaz munie d'une conduite (7) de distribution destinée à être reliée à une application (2) receveuse, **caractérisée en ce que** la conduite (7) de distribution comprend une vanne (8) d'isolation mobile entre des positions ouverte et fermée pour sélectivement autoriser ou interrompre le flux de gaz dans la conduite (7) de distribution, ladite vanne (8) d'isolation étant sensible à la pression (Pc) de gaz délivrée à la sortie (6) de la au moins une colonne (3) pour commuter en position ouverte lorsque la pression (Pc) de gaz délivrée à la sortie (6) est supérieure à une pression seuil (X) déterminée ou commuter en position fermée lorsque la pression (Pc) de gaz délivrée à la sortie (6) est inférieure à une pression seuil (X) déterminée.

## Description

La présente invention concerne une installation et un procédé de production et de fourniture de gaz enrichi en azote.

L'invention concerne plus particulièrement que une installation de production et de fourniture de gaz enrichi en azote comprenant au moins une colonne de séparation, notamment de séparation par adsorption par variation de pression, la au moins une colonne comprenant une entrée de gaz destinée à être reliée à une conduite de fourniture d'air sous pression et une sortie de gaz munie d'une conduite de distribution destinée à être reliée à une application receveuse.

De telles installations sont désignées notamment par le terme « générateur d'azote ».

Diverses applications industrielles utilisent un gaz enrichi en azote, par exemple de l'azote pur ou quasi pur. On peut par exemple citer les domaines d'activité suivants : la pétrochimie, la cosmétologie, la pharmacie, la parfumerie, les laboratoires de contrôle et la viticulture.

Pour disposer d'azote gazeux, une solution consiste à utiliser une installation de production et de fourniture utilisant une ou des colonnes de séparation. C'est-à-dire que le gaz enrichi est produit à partir d'air sous pression au moyen de colonnes d'adsorbant sélectif des composants chimiques autres que l'azote (oxygène notamment). Par exemple on utilise deux adsorbants de type PSA (adsorption par variation de pression) qui fonctionnent de façon alternée (production/régénération). Les adsorbants utilisent par exemple des charbons moléculaires.

Le fonctionnement de telles installations est le suivant : de l'air sous pression est injecté à une entrée de la colonne d'adsorbant et du gaz enrichi en azote est récupéré à une sortie de la colonne (séparation de l'oxygène de l'azote).

La molécule de charbon moléculaire est un conglomérat de charbon traité spécifiquement. Ce conglomérat a des millions de micropores de diamètre déterminé, ce qui permet de capter l'oxygène et de laisser passer les molécules d'azote.

Le fonctionnement de telles colonnes comprend généralement trois phases :
- 1 ère phase : l'air séché et filtré remplit la colonne sous pression qui va réaliser l'adsorption -> le cycle commence,
- 2ème phase : pendant cette opération, les molécules d'oxygène pénètrent dans le charbon moléculaire laissant ainsi passer les molécules d'azote qui sont trop grosses pour y pénétrer. L'azote produit est stocké dans une cuve de génération aval à partir de laquelle l'azote est débité en continu vers l'application receveuse en aval de la cuve de génération,
- 3ème phase : une vanne de purge s'ouvre effectuant ainsi une détente très rapide de la colonne d'adsorption qui expulse les molécules d'oxygène du charbon moléculaire évitant ainsi sa saturation (régénération). Le cycle est alors terminé et peut recommencer.

Pour permettre la régénération des colonnes, un limiteur de débit de gaz est interposé entre la cuve de génération et la colonne, pour restreindre le passage de gaz de l'aval (cuve de génération) vers l'amont (colonne), pendant le remplissage des colonnes. Ce limiteur de débit ne restreint cependant pas le débit de gaz de l'amont (colonne) vers l'aval (cuve de génération). La cuve de génération permet ainsi de participer partiellement au remplissage des colonnes. La cuve permet d'alimenter en continu les applications receveuses en aval. Cependant, pour éviter tout dysfonctionnement, la pression de gaz dans la cuve de génération doit rester au moins égale à la pression nécessitée par l'application receveuse en aval. Ainsi, le volume de la cuve est dimensionné en fonction des applications et peut atteindre typiquement 20 à 300 litres.

Ce type d'installation a un fonctionnement globalement satisfaisant cependant, le demandeur souhaite diminuer l'encombrement et/ou le coût de telles installations.

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement **caractérisée en ce que** la conduite de distribution comprend une vanne d'isolation mobile entre des positions ouverte et fermée pour sélectivement autoriser ou interrompre le flux de gaz dans la conduite de distribution, ladite vanne d'isolation étant sensible à la pression de gaz délivrée à la sortie de la au moins une colonne pour commuter en position ouverte lorsque la pression de gaz délivrée à la sortie est supérieure à une pression seuil déterminée ou commuter en position fermée lorsque la pression de gaz délivrée à la sortie est inférieure à une pression seuil déterminée.

Par ailleurs, des modes de réalisation de l'invention peuvent comporter l'une ou plusieurs des caractéristiques suivantes :
- la vanne d'isolation est du type pneumatique,
- la vanne d'isolation comprend un obturateur mobile sélectif de la conduite, l'obturateur étant soumis d'une part à la pression de gaz délivrée à la sortie de la au moins une colonne et, d'autre part, à une pression seuil antagoniste et/ou un organe de rappel produisant un effort antagoniste correspondant à la pression seuil,

- l'obturateur comprend un piston délimitant deux chambres, les deux chambres étant respectivement en relation fluidique avec la pression de gaz délivrée à la sortie de la au moins une colonne et une source de pression déterminée constante réglable ou non réglable,
- la vanne d'isolation est du type électro-magnétique et pilotée par une logique électronique reliée à un capteur de pression mesurant une pression représentative de la pression de gaz délivrée à la sortie de la au moins une colonne,
- la conduite de distribution comprend, en aval de la vanne d'isolation, un régulateur de débit.

L'invention concerne également un procédé de production et de fourniture de gaz enrichi en azote à une application receveuse au moyen d'une installation comprenant au moins une colonne de séparation, notamment par adsorption par variation de pression, la au moins une colonne comprenant une entrée de gaz reliée à une conduite de fourniture d'air sous pression et une sortie de gaz reliée à l'application receveuse via une conduite de distribution, la au moins une colonne étant alimentée à son entrée par du gaz sous pression lors des phases de production de cycles successifs comprenant de une phase de production et une phase de régénération, la sortie de gaz étant isolée de l'application receveuse au moyen d'une vanne d'isolation tant que la pression de gaz au niveau de la sortie de gaz est inférieure à une pression seuil déterminée.

Par ailleurs, des modes de réalisation de l'invention peuvent comporter l'une ou plusieurs des caractéristiques suivantes :
- la vanne d'isolation est du type pneumatique et mobile entre des positions ouverte et fermée pour sélectivement autoriser ou interrompre le flux de gaz dans la conduite de distribution, ladite vanne d'isolation étant pilotée par la pression de gaz délivrée à la sortie de la au moins une colonne pour commuter en position ouverte ou fermée lorsque respectivement la pression de gaz délivrée à la sortie (6) est supérieure ou inférieure à une pression seuil déterminée,
- la vanne d'isolation est également soumise à une pression seuil déterminée pour commuter en position ouverte ou fermée lorsque respectivement la pression de gaz délivrée à la sortie est supérieure ou inférieure à la pression seuil,
- la pression seuil est produite par un générateur tel qu'un réseau d'air comprimé sous pression alimentant la vanne d'isolation via un organe de régulation de pression tel qu'un détendeur de pression,
- la pression seuil est comprise entre 7 et 10 bar.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant la structure et le fonctionnement d'une installation de production et de fourniture d'azote selon un exemple de réalisation de l'invention,
- la figure 2 représente une vue schématique et simplifiée d'un exemple possible de structure d'une vanne d'isolation utilisée dans l'installation de la figure 1.

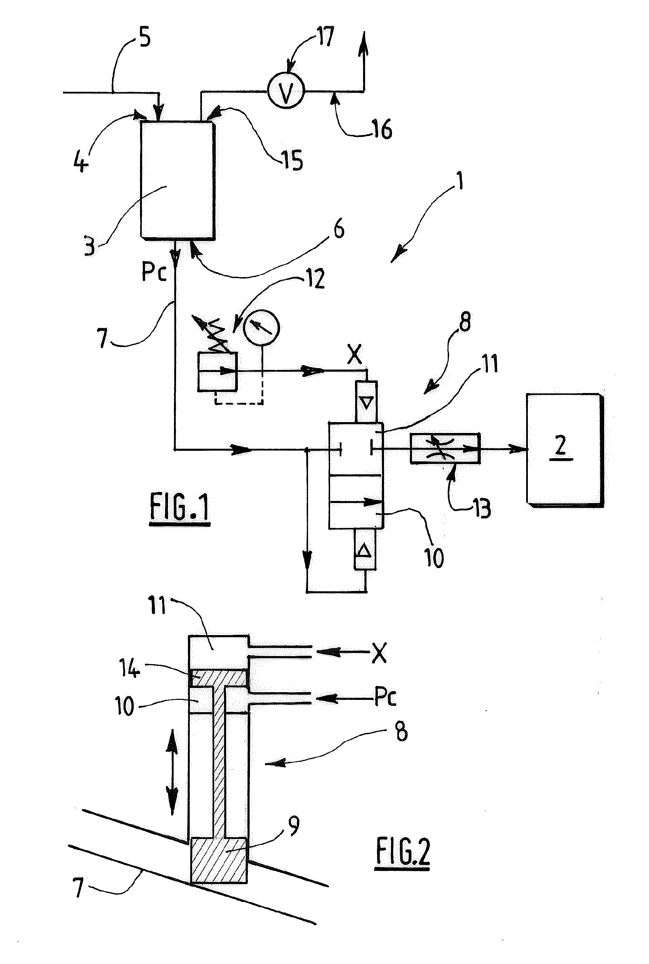

L'installation (générateur d'azote) représentée à la figure 1 comprend une colonne 3 de séparation, notamment de séparation par adsorption par variation de pression. La colonne 3 comprend par exemple un charbon moléculaire pour l'adsorption sélective au moins de l'oxygène gazeux. La colonne 3 comporte une entrée 4 de gaz destinée à être reliée à une conduite 5 de fourniture d'air filtré sous pression.

Par exemple, l'entrée 4 de la colonne est alimentée en air sous pression d'un réseau d'air sous pression ou via un ou des compresseurs.

La colonne 3 comprend une sortie 6 de gaz enrichi en azote qui débouche dans une conduite 7 de distribution destinée à être reliée à une application 2 receveuse du gaz enrichi.

La colonne 3 comporte également classiquement une sortie 15 de purge reliée à une conduite 16 de purge munie d'une vanne 17 de purge. La conduite 16 de purge évacue le gaz enrichi en oxygène emprisonné dans la colonne 3 lors des phases de régénération. Ce gaz de régénération peut être évacué à l'atmosphère ou récupéré pour une autre application.

Selon une particularité de l'invention, la conduite 7 de distribution ne comprend pas de cuve de génération.

Plus précisément, la conduite 7 de distribution comprend une vanne 8 d'isolation qui permet sélectivement soit d'alimenter l'application 2 receveuse en aval soit d'isoler la colonne 3 de l'application receveuse en aval, pour permettre le remplissage ou la purge de la colonne 3.

La vanne 8 d'isolement est ainsi mobile entre des positions ouverte et fermée pour sélectivement autoriser ou interrompre le flux de gaz dans la conduite 7 de distribution. La vanne 8 d'isolation est sensible à la pression Pc de gaz délivrée à la sortie 6 de la colonne 3 pour commuter en position ouverte lorsque la pression Pc de gaz délivrée à la sortie 6 est supérieure à une pression seuil X déterminée ou commuter en position fermée lorsque la pression Pc de gaz délivrée à la sortie 6 est inférieure à une pression seuil X déterminée.

La vanne 8 d'isolation permet ainsi de fournir sélectivement une contre-pression à la colonne 3 pendant son remplissage. C'est-à-dire que la vanne 7 d'isolation permet d'isoler sélectivement la colonne 3 de l'application 2 receveuse dont la pression peut être très variable.

De préférence, la vanne 8 d'isolation est pilotée pneumatiquement.

Par exemple, comme représenté aux figures, la vanne 8 d'isolation peut comprendre un obturateur mobile sélectif de la conduite 7. L'obturateur 9 est par exemple soumis d'une part à la pression Pc de gaz délivrée à la sortie 6 de la colonne 3 et, d'autre part, à une pression seuil X antagoniste fixe et déterminée.

Par exemple, et comme représenté à la figure 2, l'obturateur 9 peut être solidaire d'un piston 14 délimitant, dans une tête de pilotage, deux chambres 10, 11 de travail pour du gaz. Les deux chambres 10, 11 de travail de part et d'autre du piston 14 sont respectivement en relation fluidique avec la pression Pc de gaz délivrée à la sortie 6 de la colonne 3 et avec une source de pression X déterminée constante réglable ou non réglable.

Ainsi, selon lorsque la pression Pc en sortie de colonne excède la pression X seuil, la vanne 8 d'isolation ouvre le passage dans la conduite 7 de distribution (et inversement).

Bien entendu les représentations schématiques des figures ne sont nullement limitatives. Ainsi, il est possible de prévoir un organe de rappel tel qu'un ressort produisant un effort sur l'obturateur 9 le sollicitant en direction de sa fermeture (ou en direction de son ouverture) correspondant à une valeur de pression seuil X déterminée.

De même, le rapport des sections ou surfaces du piston 14 dans les deux chambres de la tête de pilotage de la vanne 8 peut nécessiter de corriger la pression X seuil. Ainsi, cette pression X seuil peut être différente de la pression minimale à atteindre dans les colonnes 3.

La vanne 8 d'isolation peut être constituée, par exemple de la vanne commercialisée par la société BURKERT sous la référence « Type 2000 ».

La pression X seuil de référence est choisie à la valeur minimale à partir de laquelle le fonctionnement de la colonne 3 est optimal, par exemple une valeur comprise entre 7 et 10, et de préférence entre 7 et 8 bar. Cette pression X seuil est obtenue par exemple à partir d'un réseau d'air sous pression ou via un compresseur et peut être maintenue fixe via un détendeur 12 fixe ou réglable ou encore un clapet taré à une pression suffisante pour offrir un delta de pression entre le réseau d'air d'alimentation qui compense la perte de charge dans les colonnes. Par exemple, un réseau à 8,5 bar alimentant un clapet taré à 1,5 bar, fournit donc en sortie une pression X de 7 bar). Le gaz à la pression X seuil alimente en continu une chambre 11 de la vanne 8 d'isolation.

Par exemple, la pression délivrée par le détendeur 12 tient compte des éventuelles pertes de charge dans le circuit en amont de la vanne 8 d'isolation. C'est-à-dire que le détendeur 12 est réglé pour fournir une pression seuil X augmentée des pertes de charges (par exemple de l'ordre de 1,5 bar).

L'autre chambre 10 de la vanne 8 est alimentée en gaz provenant de la sortie 6 de la colonne 3.

Lors de la phase de remplissage de la colonne 3, tant que la pression Pc en sortie de colonne 3 (représentative de la pression au sein de la colonne 3) n'est pas supérieure à la pression X seuil, la vanne 8 reste fermée. Au terme du remplissage, la colonne 3 et l'application 2 receveuse aval sont mises en relation de préférence progressivement par un débit régulé grâce à la vanne 8. La commutation progressive (pression Pc de sortie qui dépasse progressivement la pression X seuil) permet une ouverture douce et progressive du passage qui est favorable au rendement de l'installation. En effet, lorsque cette pression dans la colonne 3 atteint et excède la valeur de la pression X seuil, la vanne 8 d'isolation commute en position ouverte et alimente ainsi en gaz enrichi en azote l'application 2 receveuse en aval. Lors des phases de régénération, la pression Pc dans la colonne 3 chute et commute la vanne 8 en position fermée isolant ainsi la colonne 3 de l'application 2 aval.

Un régulateur 13 de débit, fixe ou réglable est de préférence disposé entre la vanne 8 d'isolation et l'application 2 receveuse, pour garantir un débit de gaz constant, indépendamment des valeurs de pression amont et aval.

On conçoit donc aisément que tout en étant de structure simple et peu coûteuse, l'invention permet de garantir une pression stable dans les colonnes 3, une alimentation stable à un utilisateur, sans nécessiter de cuve de génération

La solution est moins coûteuse, plus compacte que les solutions connues.

Dans le cas où une cuve tampon est prévue entre la vanne et l'application2 receveuse pour stocker du gaz enrichi en azote, l'invention peut permettre de garantir une pression supérieure dans cette cuve tampon.

Bien entendu, d'autres variantes de réalisation sont envisageables. Par exemple, la vanne d'isolation peut être du type électro-magnétique et pilotée par une logique électronique reliée également à un capteur de pression mesurant une pression représentative de la pression Pc de gaz délivrée à la sortie 6 de la colonne 3. Par ailleurs, par soucis de simplification, l'invention a été décrite aux figures avec une seule colonne de séparation. Cependant, des installations à plusieurs colonnes font également partie de l'invention.

## Revendications

1. Installation de production et de fourniture de gaz enrichi en azote, l'installation (1) comprenant au moins une colonne (3) de séparation, notamment de séparation par adsorption par variation de pression, la au moins une colonne (3) comprenant une entrée (4) de gaz destinée à être reliée à une conduite de fourniture d'air sous pression et une sortie (6) de gaz munie d'une conduite (7) de distribution destinée à être reliée à une application (2) receveuse, **caractérisée en ce que** la conduite (7) de distribution comprend une vanne (8) d'isolation mobile entre des positions ouverte et fermée pour sélectivement autoriser ou interrompre le flux de gaz dans la conduite (7) de distribution, ladite vanne (8) d'isolation étant sensible à la pression (Pc) de gaz délivrée à la sortie (6) de la au moins une colonne (3) pour commuter en position ouverte lorsque la pression (Pc) de gaz délivrée à la sortie (6) est supérieure à une pression seuil (X) déterminée ou commuter en position fermée lorsque la pression (Pc) de gaz délivrée à la sortie (6) est inférieure à une pression seuil (X) déterminée, et **en ce que** la vanne (8) d'isolation est du type pneumatique et comprend un obturateur (9) mobile sélectif de la conduite (7), l'obturateur (9) étant soumis d'une part à la pression (Pc) de gaz délivrée à la sortie (6) de la au moins une colonne (3) et, d'autre part, à une pression seuil (X) antagoniste et/ou un organe de rappel produisant un effort antagoniste correspondant à la pression seuil (X).

2. Installation selon la revendication 1, **caractérisée en ce que** l'obturateur (9) comprend un piston (14) délimitant deux chambres (10, 11), les deux chambres (10, 11) étant respectivement en relation fluidique avec la pression (Pc) de gaz délivrée à la sortie (6) de la au moins une colonne (3) et une source de pression (X) déterminée constante réglable ou non réglable.

3. Installation selon l'une quelconque des revendications 1 à 2, **caractérisée en ce que** la conduite (7) de distribution comprend, en aval de la vanne (8) d'isolation, un régulateur (13) de débit.

4. Procédé de production et de fourniture de gaz enrichi en azote à une application (2) receveuse au moyen d'une installation (1) comprenant au moins une colonne (3) de séparation, notamment par adsorption par variation de pression, la au moins une colonne (3) comprenant une entrée (4) de gaz reliée à une conduite de fourniture d'air sous pression et une sortie (6) de gaz reliée à l'application (2) receveuse via une conduite (7) de distribution, la au moins une colonne (3) étant alimentée à son entrée (4) par du gaz sous pression lors des phases de production de cycles successifs comprenant de une phase de production et une phase de régénération, la sortie (6) de gaz étant isolée de l'application (2) receveuse au moyen d'une vanne (8) d'isolation tant que la pression de gaz au niveau de la sortie (6) de gaz est inférieure à une pression seuil (X) déterminée, **caractérisé en ce que** la vanne (8) d'isolation est du type pneumatique et mobile entre des positions ouverte et fermée pour sélectivement autoriser ou interrompre le flux de gaz dans la conduite (7) de distribution, ladite vanne (8) d'isolation étant pilotée par la pression (Pc) de gaz délivrée à la sortie (6) de la au moins une colonne (3) pour commuter en position ouverte ou fermée lorsque respectivement la pression (Pc) de gaz délivrée à la sortie (6) est supérieure ou inférieure à une pression seuil (X) déterminée.

5. Procédé selon la revendication 4, **caractérisé en ce que** la vanne (8) d'isolation est également soumise à une pression seuil (X) déterminée pour commuter en position ouverte ou fermée lorsque respectivement la pression (Pc) de gaz délivrée à la sortie (6) est supérieure ou inférieure à la pression (X) seuil.

6. Procédé selon la revendication 5, **caractérisé en ce que** la pression seuil (X) est produite par un générateur tel qu'un réseau d'air comprimé sous pression alimentant la vanne (8) d'isolation via un organe (12) de régulation de pression tel qu'un détendeur de pression.

7. Procédé selon l'une quelconque des revendications 4 à 6, **caractérisé en ce que** la pression seuil (X) est comprise entre 7 et 10 bar.
